(19) Europäisches Patentamt
European Patent Office
Office européen des brevets

(11) **EP 3 258 327 A1**

(12) **EUROPEAN PATENT APPLICATION**
published in accordance with Art. 153(4) EPC

(43) Date of publication:
**20.12.2017 Bulletin 2017/51**

(51) Int Cl.:
**G05B 19/00** *(2006.01)*        **B23B 45/00** *(2006.01)*

(21) Application number: **16748737.0**

(86) International application number:
**PCT/CN2016/073723**

(22) Date of filing: **06.02.2016**

(87) International publication number:
**WO 2016/127936 (18.08.2016 Gazette 2016/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **10.02.2015  CN 201520095413 U
21.10.2015  CN 201510688789**

(71) Applicant: **Positec Power Tools (Suzhou) Co., Ltd
Suzhou, Jiangsu 215123 (CN)**

(72) Inventors:
• **WANG, Jiada**
**Suzhou**
**Jiangsu 215123 (CN)**
• **RAO, Yue**
**Suzhou**
**Jiangsu 215123 (CN)**

(74) Representative: **Stuttard, Garry Philip
Urquhart-Dykes & Lord LLP
Arena Point
Merrion Way
Leeds LS2 8PA (GB)**

(54) **WEARABLE DEVICE AND SYSTEM**

(57)     The present invention relates to a wearable device, wearable on an upper limb of a user. The wearable device includes a sensor apparatus, a control apparatus, and an alarm apparatus. The sensor apparatus includes a vibration detection module, and the vibration detection module detects vibration of the upper limb. The control apparatus includes a calculation module and a control module, and the calculation module receives a signal transmitted by the vibration detection module, and calculates a vibration status. The control module is connected to the calculation module. The control module sends a corresponding control signal to the alarm apparatus when determining that the vibration exceeds a preset value, and the alarm apparatus alarms the user according to the control signal. When receiving an alarm signal, the alarm apparatus outputs alarm information, so as to remind the operation person in time, and prevent the upper limb from being injured, improving usage safety of an electric tool.

FIG. 1

**Description**

BACKGROUND

Technical Field

The present invention relates to a wearable device.
The present invention further relates to a system that comprises a wearable device.

Related Art

An electric tool is a tool that uses electricity as power, for example, a tool such as an electric pick or an electric hammer. When a user holds an electric tool by hands to operate an electric tool to work, vibration is generated and is transmitted through the shell of the electric tool to the hands.
Due to different operating points, a conventional electric tool generates different levels of vibration. When a user uses an electric tool in ignorance, an upper limb of the task performer is very easy to be harmed due to excessively large vibration amplitude of the electric tool. Furthermore, noise, dust or the like is generated when the user uses the electric tool. However, the user cannot feel harm of the noise, dust, or the like to the body in time. When a user feel uncomfortable in the body, high frequency vibration, dust, dust, and the like have affected health and safety of the user. The conventional electric tool has a disadvantage of low usage safety.

SUMMARY

Based on this, to solve the foregoing problem, an electric tool and a wearable device is necessary to improve usage safety of the electric tool.
A wearable device includes a wristband, a protective shell, a sensor apparatus, a control apparatus, and an alarm apparatus. The protective shell is fixed on the wristband, the control apparatus is connected to the sensor apparatus and the alarm apparatus, the sensor apparatus and the control apparatus are disposed inside the protective shell, and the alarm apparatus is disposed on an outer surface of the protective shell. The sensor apparatus detects vibration of an upper limb, generates a detection signal, and sends the detection signal to the control apparatus, and the control apparatus generates detection data according to the detection signal, determines whether detection data is greater than a preset detection threshold, and if yes, sends an alarm signal to the alarm apparatus. The alarm apparatus outputs alarm information when receiving the alarm signal.
Preferably, the sensor apparatus includes an acceleration sensor that is connected to the control apparatus, and the detection signal includes an acceleration detection signal; the acceleration sensor detects an acceleration of the wristband vibration, and sends the acceleration detection signal to the control apparatus.
Preferably, the sensor apparatus includes a vibration sensor that is connected to the control apparatus, and the detection signal includes a vibration amplitude detection signal; the vibration sensor detects vibration amplitude of the wristband vibration, and sends the vibration amplitude detection signal to the control apparatus.
Preferably, the alarm apparatus includes at least one of a digital display tube, an alarm light, a buzzer, or a vibrator that is connected to the control apparatus.
Preferably, the wristband includes a first end and a second end that are connected in a detachable manner; multiple buckle bulges are disposed at the first end of the wristband, and multiple buckle grooves matching the buckle bulges are disposed at the second end of the wristband.
Preferably, a quantity of the buckle grooves is greater than a quantity of the buckle bulges, or a quantity of the buckle bulges is greater than a quantity of the buckle grooves.
Preferably, the wristband further includes a control button that is disposed on the wristband and connected to the control apparatus.
Preferably, the wearable device further includes a power supply apparatus that is disposed on the wristband and that is connected to the sensor apparatus, the control apparatus, and the alarm apparatus.
An electric tool includes a main body of electric tool, a vibration absorption subassembly, and a handle, and further includes the wearable device. The main body is connected to the handle by using the vibration absorption subassembly.
An electric tool system includes a main body of electric tool, a vibration absorption subassembly, and a handle, and further includes the wearable device. The main body is connected to the handle by using the vibration absorption subassembly.
By means of the foregoing wearable device and electric tool, the sensor apparatus detects the vibration of the upper limb, generates the detection signal, and sends the detection signal to the control apparatus. The control apparatus generates the detection data according to the detection signal, determines whether the detection data is greater than the preset detection threshold, and if yes, sends the alarm signal to the alarm apparatus. When receiving the alarm signal, the alarm apparatus outputs the alarm information, so as to remind the user in time, and prevent the wrist from being injured, improving the usage safety of the electric tool.

A safety reminding method for a power tool user includes steps: collecting data related to the safety of the user by a sensor, and sending the collected data to an intelligent device by the sensor; receiving and processing the collected data to obtain intermediate data by the intelligent device; and comparing a value of the intermediate data with a predetermined value, if the value of the intermediate data is greater than the predetermined value, reminding the user by the intelligent device.

In one of the embodiments, the sensor is one or more of an acceleration sensor, a microphone, or a dust detector.

In one of the embodiments, the collect data includes a vibration level of a power tool, a noise decibel heard by the user, an amount of dust inhaled by the user, or work time.

In one of the embodiments, before the step of collecting data related to user safety by a sensor, and sending the collected data to an intelligent device by the sensor, the method further includes a step of associating the sensor with the intelligent device, and starting the power tool.

In one of the embodiments, a mode of connection between the sensor and the intelligent device includes one or more of WiFi, Zigbee, 4G, 3G, 2G, or Bluetooth.

In one of the embodiments, the step of receiving and processing the collected data to obtain intermediate data by the intelligent device includes: receiving the collected data by the intelligent device, and calculating an average value, a peak value, or a total value of the collected data received at intervals.

In one of the embodiments, the step of comparing a value of the intermediate data with a predetermined value, if the value of the intermediate data is greater than the predetermined value, reminding the user by the intelligent device includes: feeding back a stop signal to the power tool by the intelligent device, and receiving the stop signal to stop work by the power tool.

In one of the embodiments, the step of collecting data related to user safety by a sensor, and sending the collected data to an intelligent device by the sensor includes: further transmitting the collected data to a cloud or a server by the sensor, in order to store the collected data.

A safety reminding apparatus for a power tool user includes a sensor and a reminding system. The reminding system includes a data processing unit and a reminding unit. The sensor is configured to collect data related to user safety, and transmit the collected data to the data processing unit. The data processing unit is configured to receive the collected data, process the collected data to obtain intermediate data, compare a value of the intermediate data with a predetermined value, and if the value of the intermediate data is greater than the predetermined value, send a reminder to the reminding unit, so that the reminding unit reminds the user.

In one of the embodiments, the reminding system further includes a feedback unit, the feedback unit is configured to feed back a stop signal to the power tool, so that the power tool stop work.

By means of foregoing safety reminding system and apparatus for the power tool user, the sensor collects the data related to the user safety, and transmits the collected data to the intelligent device; the intelligent device receives the collected data, and analyzes and processes the data, to obtain intermediate data that has been analyzed and processed, and compares the intermediate data with the predetermined value; when the intermediate data is greater than the predetermined value, the intelligent device reminds the user, so that the user may receive reminding information at any time, and then health and safety of the user are prevented from being affected by noise, dust, high frequency vibration, and the like that are generated in a work process of the power tool.

The present invention further provides a wearable device, wearable on an upper limb of a user, where the wearable device includes a sensor apparatus, a control apparatus, and an alarm apparatus, where the sensor apparatus includes a vibration detection module, the vibration detection module detects vibration of the upper limb, the control apparatus includes a calculation module and a control module, the calculation module receives a signal transmitted by the vibration detection module and obtains a total vibration amount according to a first preset algorithm, the control module is connected to the calculation module, the control module sends a corresponding control signal to the alarm apparatus when determining that the total vibration amount exceeds a preset value, and the alarm apparatus alarms the user according to the control signal.

Preferably, the vibration detection module is an acceleration sensor.

Preferably, the sensor apparatus further includes at least one of a dust detection module or a noise detection module, the calculation module calculates a total dust amount or a total noise amount, the control module sends a corresponding control signal to the alarm apparatus when determining that the total dust amount or the total noise amount exceeds a preset value, and the alarm apparatus alarms the user according to the control signal.

The present invention further provides a system, and the system includes: a power device, held by a user, to perform a preset task; and a wearable device, which is the wearable device described in the foregoing.

Preferably, a manner in which an alarm apparatus alarms the user includes at least one of a manner of controlling the alarm apparatus to vibrate, controlling the alarm apparatus to produce a sound, or sending a control signal to the power device to make the power device stop a task.

Preferably, the control apparatus includes an identification module, the identification module identifies a type of the power device according to a signal from a vibration detection module, and the calculation module revises a first preset algorithm according to the type of the power device.

The present invention further provides a system, including: a power device, held by a user, to perform a preset task; a wearable device, wearable on an upper limb of the user, and including a sensor apparatus, where the sensor apparatus detects vibration of the upper limb; a control apparatus, which includes a calculation module, where the calculation module receives a signal transmitted by the sensor apparatus, and obtains an accumulated total vibration amount according to a first preset algorithm, and transmits a calculation result outwards; and an intelligent device, which includes a display apparatus, receives the signal transmitted by the calculation module, and displays the signal by using the display apparatus.

Preferably, the control apparatus further includes an identification module, and the identification module identifies a type of the power device according to the signal transmitted by the sensor apparatus.

Preferably, the calculation module receives a signal from the identification module, and revises a first preset algorithm according to the type of the power device.

Preferably, the calculation module receives a signal from the identification module, obtains the accumulated vibration component of the power device of the particular type according to a second preset algorithm, and transmits a calculation result outwards.

Preferably, the calculation module receives a signal from the identification module, records a work status of the power device of the particular type, and transmits a recorded result outwards.

Preferably, the work status includes at least one of working time at a time, accumulated working time, or number of work times.

Preferably, the system further includes an alarm module, the control apparatus further includes a control module, the control module is connected to the calculation module, the control module sends a control signal to the alarm module when determining that the total vibration amount exceeds a preset value, and the alarm module alarms a user.

Preferably, the control apparatus is disposed in the wearable device, or is disposed in the intelligent device.

Preferably, the control apparatus further includes a wireless transmission module, and the wireless transmission module transmits the calculation result of the calculation module to the Internet.

The present invention further provides a system, including: a power device, held by a user, to perform a preset task; a wearable device, wearable on an upper limb of the user, and including a sensor apparatus, where the sensor apparatus detects vibration of the upper limb; a control apparatus, including a calculation module and an identification module, where the identification module identifies a type of the power device according to a signal of the sensor apparatus, and the calculation module receives the signal of the sensor apparatus and a signal of the identification module, obtains an accumulated vibration component of the power device of the particular type according to a second preset algorithm, and transmits a calculation result outwards; and an intelligent device, which includes a display apparatus, receives a signal transmitted by the calculation module, and displays the signal by using the display apparatus.

The present invention further provides a system, including: a power device, held by a user, to perform a preset task; a wearable device, wearable on an upper limb of the user, and including a sensor apparatus, where the sensor apparatus detects vibration of the upper limb; a control apparatus, including a calculation module and an identification module, where the identification module identifies a type of the power device according to a signal of the sensor apparatus, and the calculation module receives the signal of the sensor apparatus and a signal of the identification module, records a work status of the power device of the particular type, and transmits a recorded result outwards; and an intelligent device, which includes a display apparatus, receives a signal transmitted by the calculation module, and displays the signal by using the display apparatus.

The present invention further provides a system, including: a power device, held by a user, to perform a preset task; and a wearable device, including a sensor apparatus and a control apparatus, where the sensor apparatus detects vibration of the upper limb, the control apparatus includes an identification module, and the identification module receives a signal transmitted by the sensor apparatus, and identifies a type of the power device according to the received signal.

Preferably, the sensor apparatus includes an acceleration sensor, and the acceleration sensor detects an acceleration generated by the vibration of the upper limb.

Preferably, the identification module obtains a vibration spectrum graph of the power device according to a signal of a sensor apparatus, and identifies the type of the power device according to the vibration spectrum graph.

Preferably, the identification module obtains accelerations that are in three directions of X, Y, and Z according to a signal of an acceleration sensor, and identifies the type of the power device according to a numerical relationship between the accelerations that are in the three directions.

Preferably, the control apparatus includes a calculation module, and the calculation module receives a signal of the sensor apparatus, and obtains an accumulated total vibration amount according to a first preset algorithm.

Preferably, a calculation module receives a signal of the identification module, and revises a first preset algorithm according to the type of the power device.

Preferably, the control apparatus includes a calculation module, and the calculation module receives a signal of the sensor apparatus and a signal of the identification module, and obtains the accumulated vibration component of the power device of the particular type according to a second preset algorithm.

Preferably, the control apparatus includes a calculation module, and the calculation module receives a signal of the sensor apparatus and a signal of the identification module, and records a work status of the power device of the particular type.

The present invention further provides a system, including: a power device, held by a user, to perform a preset task; a wearable device, including a sensor apparatus, where the sensor apparatus detects vibration of the upper limb; and an intelligent device, where the intelligent device includes a control apparatus, the control apparatus includes an identification module, and the identification module receives a signal transmitted by the sensor apparatus, and identifies a type of the power device according to the received signal.

The present invention further provides a wearable device, wearable on an upper limb of a user, where the wearable device includes a sensor apparatus, a control apparatus, and an alarm apparatus, where the sensor apparatus includes a vibration detection module, the vibration detection module detects vibration of the upper limb, the control apparatus includes a calculation module and a control module, the calculation module receives a signal transmitted by the vibration detection module and calculates a vibration status, the control module is connected to the calculation module, the control module sends a corresponding control signal to the alarm apparatus when determining that the vibration exceeds a preset value, and the alarm apparatus alarms the user according to the control signal.

Preferably, the vibration status includes a total vibration exposure amount of the upper limb, the calculation module obtains an accumulated total vibration amount according to a first preset algorithm, the control module sends a corresponding control signal to the alarm apparatus when determining that the total vibration amount exceeds a preset value, and the alarm apparatus alarms the user according to the control signal.

Preferably, the vibration status includes vibration duration, the calculation module records the vibration duration according to a signal transmitted by the vibration detection module, the control module sends a corresponding control signal to the alarm apparatus when determining that the vibration duration exceeds a preset value, and the alarm apparatus alarms the user according to the control signal.

Preferably, the vibration status includes vibration intensity within a unit time, the calculation module calculates the vibration intensity within the unit time according to a signal transmitted by the vibration detection module, the control module sends a corresponding control signal to the alarm apparatus when determining that the vibration intensity within the unit time exceeds a preset value, and the alarm apparatus alarms the user according to the control signal.

Preferably, the vibration detection module is an acceleration sensor.

Preferably, the sensor apparatus further includes at least one of a dust detection module or a noise detection module, the calculation module calculates a total dust amount or a total noise amount, the control module sends a corresponding control signal to the alarm apparatus when determining that the total dust amount or the total noise amount exceeds a preset value, and the alarm apparatus alarms the user according to the control signal.

The present invention further provides a system, and the system includes: a power device, held by a user, to perform a preset task; and a wearable device, which is the wearable device described in the foregoing.

Preferably, a manner in which an alarm apparatus alarms the user includes at least one of a manner of controlling the alarm apparatus to vibrate, controlling the alarm apparatus to produce a sound, or sending a control signal to the power device to make the power device stop a task.

Preferably, the control apparatus further includes an identification module, and the identification module identifies a type of the power device according to a signal of a vibration detection module.

Preferably, a calculation module receives a signal of the identification module, and revises a first preset algorithm according to the type of the power device.

Preferably, a vibration status includes an accumulated vibration component of the power device of the particular type, a calculation module receives a signal of the identification module, and obtains the accumulated vibration component of the power device of the particular type according to a second preset algorithm, a control module sends a corresponding control signal to the alarm apparatus when determining that the vibration component exceeds a preset value, and the alarm apparatus alarms the user according to the control signal.

The present invention further provides a system, where the system includes: a power device, held by a user, to perform a preset task; a wearable device, wearable on an upper limb of the user, and including a sensor apparatus, where the sensor apparatus detects vibration of the upper limb, and transmits a detection signal to a control apparatus, the control apparatus includes a calculation module, the calculation module receives the signal transmitted by the sensor apparatus, calculates a vibration status, and transmits a calculation result to an intelligent device, and the intelligent device includes a display apparatus, receives a signal transmitted by the calculation module, and displays the signal by using the display apparatus.

Preferably, the control apparatus further includes an identification module, and the identification module identifies a type of the power device according to the signal transmitted by the sensor apparatus.

Preferably, the calculation module receives a signal of the identification module, records a work status of the power device of the particular type, and transmits a recorded result to the intelligent device.

Preferably, the work status includes at least one of working time at a time, accumulated working time, or number of work times.

Preferably, the system further includes an alarm module, the control apparatus further includes a control module, the control module is connected to the calculation module, the control module sends a control signal to the alarm module when determining that the vibration status exceeds a preset value, and the alarm module alarms a user.

Preferably, the system includes the control apparatus.

Preferably, the control apparatus further includes a wireless transmission module, and the wireless transmission module transmits the calculation result of the calculation module to the Internet.

The present invention further provides a system, and the system includes: a power device, held by a user, to perform a preset task; and

a wearable device, wearable on an upper limb of the user, and including a sensor apparatus and a control apparatus, where the sensor apparatus detects vibration of the upper limb, the control apparatus includes an identification module, and the identification module receives a signal transmitted by the sensor apparatus, and identifies a type of the power device according to the received signal.

Preferably, the sensor apparatus includes an acceleration sensor, and the acceleration sensor detects an acceleration generated by the vibration of the upper limb.

Preferably, the identification module obtains a vibration spectrum graph of the power device according to a signal of a sensor apparatus, and identifies the type of the power device according to the vibration spectrum graph.

Preferably, the identification module obtains accelerations that are in three directions of X, Y, and Z according to a signal of an acceleration sensor, and identifies the type of the power device according to a numerical relationship between the accelerations that are in the three directions.

Preferably, the control apparatus includes a calculation module, and the calculation module receives a signal of the sensor apparatus, and calculates a vibration status.

Preferably, the control apparatus includes a calculation module, and the calculation module receives a signal of the sensor apparatus and a signal of the identification module, and records a work status of the power device of the particular type.

The present invention further provides a system, where the system includes: a power device, held by a user, to perform a preset task; a wearable device, including a sensor apparatus, where the sensor apparatus detects vibration of the upper limb, and transmits a detected signal to an intelligent device; the intelligent device includes a control apparatus, the control apparatus includes an identification module, and the identification module receives a signal transmitted by the sensor apparatus, and identifies a type of the power device according to the received signal.

BRIEF DESCRIPTION OF THE DRAWINGS

FIG. 1 is a structural diagram of a wearable device according to a first preferred embodiment;

FIG. 2 is a structural diagram of a wearable device according to a second preferred embodiment;

FIG. 3 is a flowchart of a safety reminding method for a power tool user according to a first preferred embodiment;

FIG. 4 is a schematic structural diagram of a safety reminding apparatus according to a third preferred embodiment;

FIG. 5 is a structural diagram of a first preferred embodiment of a system that has a wearable device;

FIG. 6 is a circuit block diagram of a first preferred embodiment of a wearable device according to the embodiment shown in FIG. 5;

FIG. 7 is a circuit block diagram of a second preferred embodiment of a wearable device according to the embodiment shown in FIG. 5;

FIG. 8 is a circuit block diagram of a second preferred embodiment of a system that has a wearable device;

FIG. 9 is a circuit block diagram of a third preferred embodiment of a system that has a wearable device.

DETAILED DESCRIPTION

To enable the foregoing objective, characteristic, and advantage of the present invention to be clearer and easier to understand, the following describes specific embodiments of the present invention in detail with reference to accompanying drawings. In the following descriptions, many specific details are described, so that the present invention can be fully understood. However, the present invention may be implemented in many other manners that are different from those described herein. A person skilled in the art may make similar improvement without disobeying the meaning of the present invention. Therefore, the present invention is not limited by specific embodiments disclosed in the following.

It should be noted that, when a component is referred to as "being fixed to" another component, the component may be directly on another component, or a centered component may exist. When a component is regarded as "being connected to" another component, the component may be directly connected to another component, or a centered component may exist.

It should be noted that, a wristband is wearable on a wrist, and therefore, detection of vibration of the wristband is equivalent to detection of vibration of the wrist.

Unless otherwise defined, all technical and scientific terms used in this document have same meanings as those understood by the person skilled in the art of the present invention. The terms used in the specification of the present invention in this document are only for a purpose of describing a specific embodiment, but are not intended to limit the present invention. The term "and/or" used in this document includes any combination or all combinations of one or more related listed items.

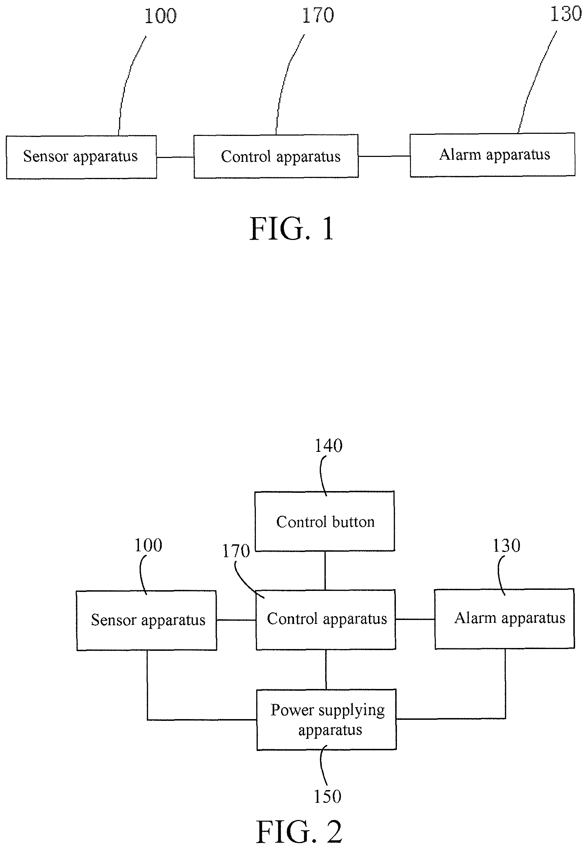

As shown in FIG. 1, a wearable device includes a wristband, a protective shell, a sensor apparatus 100, a control apparatus 170, and an alarm apparatus 130. The protective shell is fixed on the wristband. The control apparatus 170 is connected to the sensor apparatus 100 and the alarm apparatus 130, and the sensor apparatus 100 and the control apparatus 170 are disposed inside the protective shell. The alarm apparatus 130 is disposed on an outer surface of the protective shell.

The sensor apparatus 100 is configured to detect vibration of a wrist, generate a detection signal, and send the detection signal to the control apparatus 170. The control apparatus 170 generates detection data according to the detection signal, determines whether the detection data is greater than a preset detection threshold, and if yes, sends an alarm signal to the alarm apparatus 130. The alarm apparatus 130 outputs alarm information when receiving the alarm signal. A value of the detection threshold may be adjusted according to an actual task status. If the detection data is greater than the detection threshold, it is determined that during a task, a degree of the vibration of the wrist will injure the wrist, and the alarm information is output to remind an operation person. If the detection data is not greater than the detection threshold, the alarm information is not output. Generally, the value of the detection threshold is set according to a vibration status of a used power tool.

The protective shell is used for protecting the sensor apparatus 100 and the control apparatus 170 from being damaged due to collision. The wristband is wearable on the wrist of the operation person, so that the sensor apparatus 100 accurately detects the vibration of the wrist. The protective shell and the wristband may be fixed by means of welding, may be fixed by means of cohesion, or may be fixed in another manner. In this embodiment, the protective shell is a metal shell, further protecting the sensor apparatus 100 and the control apparatus 170 from being damaged.

In one of the embodiments, the wristband includes a first end and a second end that are connected in a detachable manner; multiple buckle bulges are disposed at the first end of the wristband, and multiple buckle grooves matching the buckle bulges are disposed at the second end of the wristband. In this embodiment, the buckle bulges and the buckle grooves are respectively disposed on the first end and the second end of the wristband, so that the first end and the second end are connected by means of buckling fixation, operations are simple, and detachment is convenient. In another embodiment, the first end and the second end of the wristband may alternatively be connected by means of absorbtion fixation or fastener fixation.

Further, a quantity of the buckle grooves is greater than a quantity of the buckle bulges, or a quantity of the buckle bulges is greater than a quantity of the buckle grooves. The operation person may select a proper bucking position according to the thickness of the wrist, so as to improve a fixation effect, and prevent the wrist vibration detection from being affected due to swinging of the wearable device during the task of the operation person. Accuracy of the wrist vibration detection by the sensor apparatus 100 can be further increased.

In one of the embodiments, the sensor apparatus 100 includes an acceleration sensor that is connected to the control apparatus 170, and the detection signal includes an acceleration detection signal. The acceleration sensor performs wrist vibration acceleration detection and sends the acceleration detection signal to the control apparatus 170.

Correspondingly, the detection threshold includes an acceleration threshold. The control apparatus 170 converts the acceleration detection signal to acceleration detection data, determines whether the acceleration detection data is greater than the acceleration threshold, and if yes, determines that the wrist will be injured and outputs an alarm signal to the alarm apparatus 130. A value of the acceleration threshold may be adjusted according to an actual situation. The vibration acceleration detection is performed on the wrist of the operation person. If the vibration acceleration exceeds a corresponding threshold, alarm information is output to remind the operation person. In this embodiment, a three-axis acceleration sensor may be selected as the acceleration sensor, can detect acceleration changes in a horizontal direction and a vertical direction, and can send an acceleration change value in any direction to the control apparatus 170.

In one of the embodiments, the sensor apparatus 100 includes a vibration sensor that is connected to the control apparatus 170, and the detection signal includes a vibration amplitude detection signal. The vibration sensor performs wrist vibration amplitude detection and sends the vibration amplitude detection signal to the control apparatus 170.

Correspondingly, the detection threshold includes an amplitude threshold. The control apparatus 170 converts the vibration amplitude detection signal to obtain vibration amplitude data, determines whether the vibration amplitude data is greater than the amplitude threshold, and if yes, determines that the wrist will be injured and outputs an alarm signal to the alarm apparatus 130. A value of the amplitude threshold may be adjusted according to an actual situation. The vibration amplitude detection is performed on the wrist of the operation person. If vibration amplitude exceeds a corresponding threshold, alarm information is output to remind the operation person.

In a preferred embodiment, the sensor apparatus 100 may include both the acceleration sensor and the vibration sensor that are connected to the control apparatus 170, to perform vibration acceleration detection and vibration amplitude detection. If the vibration acceleration or the vibration amplitude exceeds a corresponding threshold, the alarm information can be output to remind the operation person, so as to prevent the wrist of the operation person from being injured, and further improve usage safety of the electric tool.

In one of the embodiments, the alarm apparatus 130 includes at least one of a digital display tube, an alarm light, a buzzer, or a vibrator that is connected to the control apparatus 170. A specific alarm manner may be selected according to an actual requirement. In this embodiment, the alarm apparatus 130 includes all of the digital display tube, the alarm light, the buzzer, and the vibrator. When determining that the detection data is greater than the detection threshold, the control apparatus 170 controls the digital display tube to display information such as a preset letter or number, control the alarm light to shine or flash, and control the buzzer to produce a sound. Different manners are used for producing an alarm, so that the operation person is reminded in time. It may be understood that, in another embodiment, another alarm manner may be used.

By means of the foregoing wearable device, the sensor apparatus 100 performs the wrist vibration detection, generates the detection signal, and sends the detection signal to the control apparatus 170. The control apparatus 170 generates detection data according to the detection signal, determines whether the detection data is greater than the preset detection threshold, and if yes, sends the alarm signal to the alarm apparatus 130. When receiving the alarm signal, the alarm apparatus 130 outputs the alarm information, so as to remind the operation person in time, and prevent the wrist from being injured, improving the usage safety of the electric tool.

In one of the embodiments, as shown in FIG. 2, the wearable device further includes a control button 140 that is disposed on an outer surface of a protective shell and that is connected to the control apparatus 170. The control button 140 is configured to send a control instruction to the control apparatus 170. After receiving the control instruction, the control apparatus 170 determines whether detection data is greater than a detection threshold. The control button 140 controls the control apparatus 170, so that the control apparatus 170 determines only after receiving the control instruction, preventing the wrist vibration detection from being performed on the wearable device in a non-task environment such as transportation, in order to reduce energy waste.

In one of the embodiments, still referring to FIG. 2, the wearable device further includes a power supply apparatus 150 that is disposed inside the protective shell and that is connected to the sensor apparatus 100, the control apparatus 170, and the alarm apparatus 130. The power supplying apparatus 150 is configured to provide work voltage for the sensor apparatus 100, the control apparatus 170, and the alarm apparatus 130.

Further, the power supplying apparatus 150 may include a storage battery and a charging management circuit. The storage battery is connected to the sensor apparatus 100, the control apparatus 170, and the alarm apparatus 130 by using the charging management circuit. The charging management circuit is configured to: supply power to the sensor apparatus 100, the control apparatus 170, and the alarm apparatus 130 when there is no supply from the mains; and when there is supply from the mains, charge the storage battery, and use the mains to supply power to the sensor apparatus 100, the control apparatus 170, and the alarm apparatus 130. By using the charging management circuit, power supply modes are switched according to an actual power supply status, and the storage battery is charged when there is supply from the mains, so that endurance of the wearable device is improved.

The present invention further provides an electric tool, including a main body of the electric tool, a vibration absorption subassembly, a handle, and the wearable device. The main body is connected to the handle by using the vibration absorption subassembly.

The present invention further provides an electric tool system, including an electric tool and the wearable device.

The electric tool may be specifically a tool such as an electric pick or an electric hammer. The vibration absorption subassembly may be manufactured by using a vibration absorption material. The main body and the handle are connected by using the vibration absorption subassembly, so that the main body and the handle are separated, and when an operation person holds the handle by hands to perform a task, effect of vibration generated by the electric component main body on a wrist of the operation person is reduced, improving usage safety of the electric tool.

In the wearable device in the electric tool, the sensor apparatus detects wrist vibration, generates the detection signal, and sends the detection signal to the control apparatus. The control apparatus generates the detection data according to the detection signal, determines whether the detection data is greater than the preset detection threshold, and if yes, sends the alarm signal to the alarm apparatus. When receiving the alarm signal, the alarm apparatus outputs the alarm information, so as to remind the operation person in time, and prevent the wrist from being injured, improving the usage safety of the electric tool.

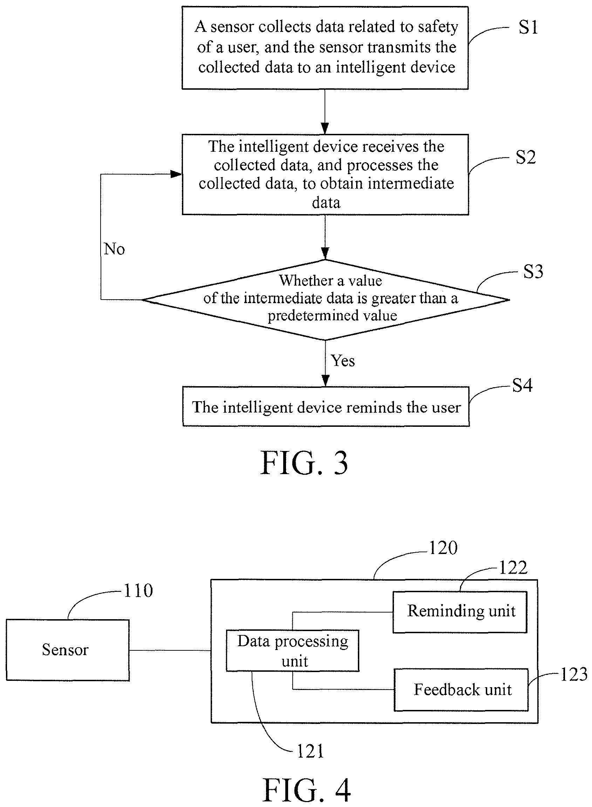

As shown in FIG. 3, a safety reminding method for a power tool user according to an embodiment includes the following steps.

S1: A sensor collects data related to safety of a user, and the sensor transmits the collected data to an intelligent device.

Specifically, the data related to the safety of the user includes a vibration level of a power tool, a noise decibel heard by the user, an amount of dust inhaled by the user, or working time. It should be noted that, the sensor may collect any one or more data of the vibration level of the power tool, the noise decibel heard by the user, the amount of the dust inhaled by the user, or the working time. The sensor that collects the vibration level of the power tool is an acceleration sensor, the sensor that collects the noise decibel heard by the user is a microphone, and the sensor that collects the amount of the dust inhaled by the user is a dust detector.

In addition, the sensor may be installed on the power tool, or may be installed on a wearable device of the user. Preferably, the acceleration sensor that collects the vibration level of the power tool is installed on the power tool, to collect a vibration frequency of the power tool. The microphone that collects the noise decibel heard by the user is installed on an earphone carried by the user, so as to directly collect the noise decibel heard by the user. The dust detector that collects the amount of the dust inhaled by the user is installed on a breathing mask carried by the user, so as to directly collect the amount of the dust inhaled by the user.

It should be noted that, the acceleration sensor may be alternatively installed on the body of the user, to collect vibration imposed on a hand of the user. The microphone and the dust detector may be alternatively installed on the power tool, to respectively collect a noise decibel in an environment and a dust amount in the environment.

In this embodiment, the used sensor includes the acceleration sensor, the microphone, and the dust detector. The acceleration sensor, the microphone, and the dust detector respectively collect, in real time, the vibration level of the power tool, the noise decibel heard by the user, and the amount of the dust inhaled by the user.

The acceleration sensor, the microphone, and the dust detector transmit the collected data to the intelligent device. Specifically, the intelligent device includes a mobile phone, an iPad, and a smartwatch, a wristband, intelligent glasses, or the like. The sensor and the intelligent device are connected in a manner of WiFi, Zigbee, 4G, 3G, 2G, Bluetooth, or the like. In this embodiment, the used intelligent device is a smartwatch, the sensor is connected to the smartwatch by means of Bluetooth, and the acceleration sensor, the microphone, and the dust detector transmit the collected data to the smartwatch by means of Bluetooth.

S2: The intelligent device receives the collected data, and processes the collected data, to obtain intermediate data.

Specifically, the intelligent device includes a data processing unit. The data processing unit is configured to receive the collected data, and process and analyze the data.

The data processing unit of the intelligent device receives the data transmitted by the sensor, and the data processing unit calculates, at intervals, an average value, a peak value, or a total value of data received within the interval. The average value, the peak value, or the total value is the intermediate data. For example, the data processing unit receives, in real time, the data transmitted by the sensor, and performs, at intervals of 10 seconds, calculation processing on data received within the 10 seconds.

In this embodiment, the smartwatch receives the vibration level, the noise decibel, and the dust amount that are transmitted respectively by the acceleration sensor, the microphone, and the dust detector, and the data processing unit in the smartwatch respectively calculates, at an interval of 10 seconds, average values of the vibration levels, the noise decibels, and the dust amounts that are received within the 10 seconds.

S3: Compare a value of the intermediate data with a predetermined value; and if the value of the intermediate data is greater than the predetermined value, perform step S4: The intelligent device reminds the user; or if the value of the intermediate data is less than the predetermined value, perform step S2 again.

Specifically, the data processing unit compares the intermediate data obtained through calculation in step S2 with the predetermined value, and if the value of the intermediate data is greater than the predetermined value, the intelligent device reminds the user, and the user stops work or rests. The intelligent device further includes a reminding unit. When the value of the intermediate data is greater than the predetermined value, the data processing unit sends a reminding signal to the reminding unit, and the reminding unit reminds the user in a manner of vibration, ringing, or the like.

In this embodiment, the average values of the vibration levels, the noise decibels, and the dust amounts that are received within the 10 seconds are respectively calculated by the data processing unit in the smartwatch at the interval of 10 seconds in step S2, and then the average values are compared with corresponding predetermined values. If any average value of the average values of the vibration levels, the noise decibels, and the dust amounts is greater than the predetermined value corresponding to the average value, the data processing unit in the smartwatch sends a reminding signal to the reminding unit in the smartwatch. After receiving the reminding signal, the reminding unit reminds the user in the manner of ringing. If all of the average values of the vibration levels, the noise decibels, and the dust amounts are less than or equal to the predetermined values corresponding to the average values, the data processing unit in the smartwatch continues to process the data transmitted from the acceleration sensor, the microphone, and the dust detector, and calculate an average value of a vibration level, a noise decibel, and a dust amount that are received within next 10 seconds.

It should be noted that, to enhance management of health and safety of the user and improve health and safety awareness of the user, before step S1 is performed, the sensor and the intelligent device need to be associated, and then the user can start the power tool. Otherwise, the power tool cannot be started. When the sensor and the intelligent device are associated, the power tool is started, and the sensor collects the data related to the safety of the user.

In addition, to further enhance protection of the health and safety of the user, when the value of the intermediate data is greater than the predetermined value, the data processing unit simultaneously sends a signal to a feedback unit in the intelligent device, the feedback unit receives the signal, and sends a feedback signal to the power tool, and the power tool receives the feedback signal and automatically stops work, further protecting the health and safety of the user.

To enhance supervision and management of the health and safety of the user, in step S1 in which a sensor collects data related to safety of a user, and the sensor transmits the collected data to an intelligent device, the sensor transmits the data collected in real time to a cloud or a server, so as to store the collected data, so that querying, evidence collection, or the like can be performed. In addition, the intermediate data obtained by the intelligent device through calculation may also be uploaded to the cloud or the server, so as to store the intermediate data, so that querying, evidence collection, or the like can be performed.

In another embodiment, the acceleration sensor, the microphone, and the dust detector respectively collect, in real time, the vibration level of the power tool, the noise decibel heard by the user, and the amount of the dust inhaled by the user, and a smartwatch records working time of the user. The acceleration sensor, the microphone, and the dust detector respectively transmit the collected vibration level of the power tool, noise decibel heard by the user, and amount of the dust inhaled by the user to the intelligent device. The smartwatch receives the vibration level of the power tool, noise decibel heard by the user, and amount of the dust inhaled by the user that are respectively transmitted by the acceleration sensor, the microphone, and the dust detector. The data processing unit in the smartwatch respectively calculates, at an interval of 10 seconds, average values of the vibration levels, the noise decibels, and the dust amounts that are received within the 10 seconds, and respectively compares the average values separately calculated by the data processing unit in the smartwatch and the working time recorded in the smartwatch with corresponding predetermined values. If any average value of the average values of the vibration levels, the noise decibels, and the dust amounts and the working time is greater than the predetermined value corresponding to the average value, the data processing unit in the smartwatch sends a reminding signal to the reminding unit in the smartwatch. After receiving the reminding signal, the reminding unit reminds the user in the manner of ringing. If all of the average values of the vibration levels, the noise decibels, and the dust amounts and the working time are less than or equal to the predetermined values corresponding to the average values, the data processing unit in the smartwatch continues to process the data transmitted from the acceleration sensor, the microphone, and the dust detector, and calculate an average value of a vibration level, a noise decibel, and a dust amount that are received within next 10 seconds.

Corresponding to the foregoing safety reminding method for the power tool user, as shown in FIG. 4, in an embodiment, a safety reminding apparatus 100 for a power tool user includes a sensor 110 and a reminding system 120. The reminding system 120 includes a data processing unit 121, a reminding unit 122, and a feedback unit 123.

Specifically, in this embodiment, the sensor 110 is connected to the reminding system 120, a mode of connection between the sensor 110 and the reminding system 120 includes WiFi, Zigbee, 3G, 2G, Bluetooth, or the like. The sensor 110 is installed on the power tool or is installed on a wearable device of the user. The sensor 110 is configured to collect data related to safety of the user, and the sensor 110 transmits the collected data to the reminding system 120. The sensor 110 is an acceleration sensor, a microphone and/or a dust detector. The data related to safety of the user includes a vibration level of a power tool, a noise decibel heard by the user, an amount of dust inhaled by the user, and a work time of the user.

The reminding system 120 is configured to receive the data collected by the sensor 110, process the collected data, to obtain intermediate data, and compare a value of the intermediate data with a predetermined value; and if the value of the intermediate data is greater than the predetermined value, remind the user, and feed back a stop signal to the power tool, and the power tool receives the stop signal and stops work.

Specifically, the data processing unit 121 is configured to receive the collected data that is transmitted by the sensor 110, calculate average value, peak value, total value of the collected data, or the like, to obtain intermediate data, and compare the intermediate data with a corresponding predetermined value. If the intermediate data is greater than the predetermined value, the data processing unit 121 sends a reminding signal to the reminding unit 122, and the reminding unit 122 reminds the user in a manner of vibration, ringing, or the like. In addition, the data processing unit 121 sends a feedback signal to the feedback unit 123, and the feedback unit 123 sends the feedback signal to the power tool, to make the power tool stop work.

It should be noted that, the reminding system 120 may alternatively include only the data processing unit 121 and the reminding unit 122.

By means of foregoing safety reminding system and apparatus for the power tool user, the sensor collects the data related to the user safety, and transmits the collected data to the intelligent device; the intelligent device receives the collected data, and analyzes and processes the data, to obtain intermediate data that has been analyzed and processed, and compares the intermediate data with the predetermined value; and when the intermediate data is greater than the predetermined value, the intelligent device reminds the user, so that the user may receive reminding information at any time, and then health and safety of the user are prevented from being affected by noise, dust, high frequency vibration, and the like that are generated in a work process of the power tool.

In the embodiments shown in FIG. 3 and FIG. 4, the reminding system 120 may be worn by the user on the wrist, and be used as the wearable device.

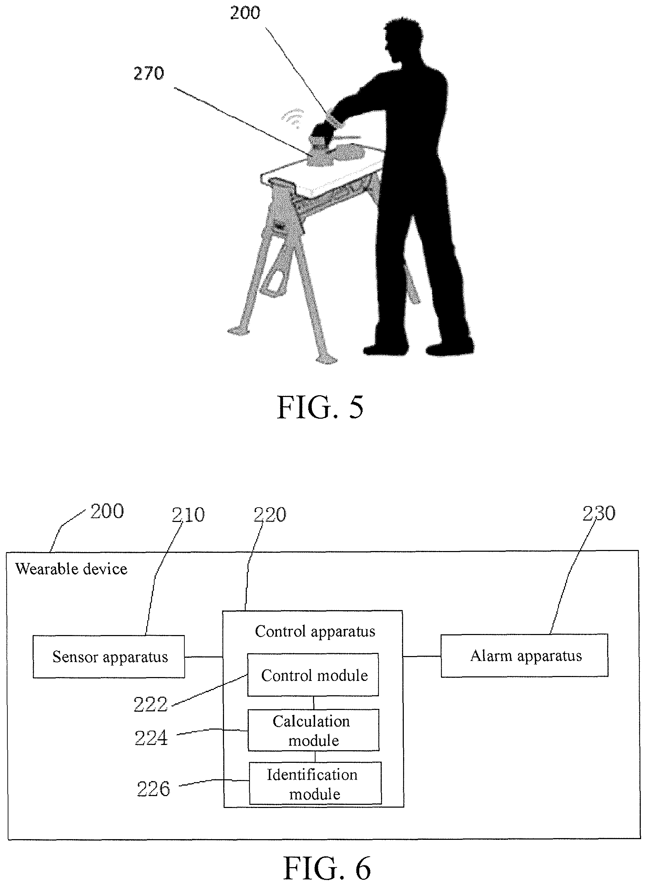

FIG. 5 shows a structural diagram of a first preferred embodiment of a system that has a wearable device 200. In this embodiment, the system includes the wearable device 200 and a power device 270.a user holds the power device 270 by hands, and vibration of the power device 270 is directly transferred to an upper limb. Positions included in the upper limb are not limited to a finger, a wrist, an arm, or the like. The wearable device 200 is worn on the upper limb of the user, and vibration of the upper limb is directly transferred to the wearable device 200. For a specific structure of the wearable device 200, refer to a structure of the wearable device 200 in the foregoing description.

FIG. 6 shows a circuit block diagram of a first preferred embodiment of the wearable device 200 according to the embodiment shown in FIG. 5. The wearable device 200 includes a sensor apparatus 210, a control apparatus 220, and an alarm apparatus 230. The sensor apparatus 210 includes a vibration detection module. The vibration detection module detects vibration of an upper limb. The control apparatus 220 includes a calculation module 224 and a control module 222. The calculation module 224 receives a signal transmitted by the vibration detection module, and obtains an accumulated total vibration amount according to a first preset algorithm. The control module 222 is connected to the calculation module 224. The control module 222 determines whether a total vibration amount exceeds a preset value. When a determining result is yes, the control module 222 sends a corresponding control signal to the alarm apparatus 230, and the alarm apparatus 230 alarms the user according to the control signal.

An alarm manner of the alarm apparatus 230 may be at least one of the following manners. Manner 1: A vibration module is disposed in the alarm apparatus 230, and after receiving the control signal transmitted by the control module 222, the alarm apparatus 230 controls the vibration module to vibrate, to make the upper limb of the user feel the vibration, and then reminds the user that the total vibration amount exceeds the standard and work needs to be stopped. Manner 2: A buzzing module or another sound production module is disposed in the alarm apparatus 230, and after receiving the control signal transmitted by the control module 222, the alarm apparatus 230 controls the buzzing module to produce a sound, so as to remind the user that the total vibration amount exceeds the standard and work needs to be stopped.

Manner 3: After receiving the control signal transmitted by the control module 222, the alarm apparatus 230 sends a control signal to the power device 270, to make the power device 270 to stop a task, so as to force the user to stop work. The alarm apparatus 230 may further directly send alarm information to a cloud by using the Internet, so as to alarm a third party in the cloud, such as an insurance company or a social and labor security department.

The vibration detection module may be an acceleration sensor, or a vibration sensor, or a gyroscope, or a combination of a gyroscope and an acceleration sensor.

Preferably, the vibration detection module is an acceleration sensor. Correspondingly, the first preset algorithm calculates the total vibration amount by using an energy-equivalent weighted acceleration within duration of four hours. If within one working day, a total vibration exposure time is not four hours, a four-hour energy-equivalent weighted acceleration should be determined by a whole-day total vibration exposure time integral of the square of a weighted acceleration.

$$\text{Specifically: } (a_{hw})_{eq(4)} = \left\{\frac{1}{T_4} \int_0^\tau [a_{hw}(t)]^2 \, dt\right\}^{1/2} \quad (a_{hw})_{eq(4)} = \left(\frac{T}{T_4}\right)^{1/2} (a_{hw})_{eq(T)}$$

$(a_{hw})_{eq(4)}$: four-hour energy-equivalent weighted acceleration, $m/s^2$
$a_{hw}(t)$: transient value of frequency weighted acceleration, $m/s^2$
$\tau$: total vibration exposure time within one working day, h
$T_4$: four hours

If a measurement time T of the energy-equivalent weighted acceleration is not four hours, the four-hour energy-equivalent weighted acceleration may be determined by using the following formula:

$$(a_{hw})_{eq(4)} = \left(\frac{T}{T_4}\right)^{1/2} (a_{hw})_{eq(T)}$$

$(a_{hw})_{eq(T)}$: energy-equivalent weighted acceleration within T hours, $m/s^2$
If total vibration exposure during a task within one working day includes several different weighted accelerations, the total energy-equivalent weighted acceleration may be determined by using the following formula:

$$(a_{hw})_{eq(T)} = \left\{\frac{1}{T} \sum_{i=1}^{n} \left[(a_{hw})_{eq(t_i)}\right]^2 t_i\right\}^{1/2}$$

$(a_{hw})_{eq(t_i)}$: an energy-equivalent weighted acceleration of an ith vibration exposure within a $t_i$ time

$$T: \sum_{i=1}^{n} t_i$$

The control apparatus 220 may further selectively include an identification module 226. The identification module 226 identifies a type of the power device 270 according to a signal of the vibration detection module.

A method for the identification module 226 to identify a tool type may be that, the identification module 226 obtains a vibration spectrum graph of the power device 270 according to the signal of the vibration detection module. The vibration spectrum graph may be an acceleration spectrum graph, a speed spectrum graph, or a displacement spectrum graph, or a spectrum graph that is any combination of the foregoing three. The identification module 226 stores a vibration spectrum graph library that includes vibration spectrum graphs of various power devices 270. The identification module 226 compares the obtained vibration spectrum graph with the vibration spectrum graphs in the vibration spectrum graph library one by one, and identifies the type of the power device 270 according to a comparison result. This comparison method may accurately determines which type of a power device 270 the power device 270 specifically is, and may enable the type to be accurate to specific one of an electric drill, an electric hammer, a reciprocating saw, or a round sand machine.

The method for the identification module 226 to identify the tool type may further be that, the identification module 226 obtains accelerations that are in three directions of X, Y, and Z according to a signal of an acceleration sensor, and identifies the type of the power device 270 according to a numerical relationship between the accelerations that are in the three directions. When the power device 270 is of an impact type, such as an electric hammer, an electric pick, or an impact drill, among accelerations that are in the three directions and that are transmitted by the acceleration sensor, only a value of the acceleration in an extention direction of a user arm is relatively large, and values of the accelerations in other directions are relatively small. When identifying that only a value of the acceleration in the X direction is relatively large, and values of the accelerations in the Y direction and the Z directions are obviously relatively small, the identification module 226 identifies that the currently working power device 270 is a device of the impact type. When the power device 270 is of a sand grinding type, such as a sander or an angle grinder, among accelerations that are in the three directions and that are transmitted by the acceleration sensor, values of the accelerations in two directions on a work plane of the power device 270 are relatively large, and a value of the acceleration in a direction that is perpendicular to the work plane of the power device 270 is relatively small. When identifying the values of the accelerations in the X direction and the Y direction are relatively large, and a value of the acceleration in the Z direction is obviously relatively small, the identification module 226 identifies that the currently working power device 270 is a device of the sand grinding type. When the power device 270 is of a swinging type, such as an oscillator or an impact wrench, among accelerations that are in the three directions and that are transmitted by the acceleration sensor, only a value of the acceleration in a direction that is perpendicular to an extention direction of a user arm is relatively large, and values of the accelerations in other directions are relatively small. When identifying that a value of the acceleration in the Y direction is relatively large, and values of the accelerations in the X direction and the Z direction are obviously relatively small, the identification module 226 identifies that the currently working power device 270 is a device of the swinging type.

The method for the identification module 226 to identify the tool type may further be identification according to a frequency and/or amplitude of vibration.

Preferably, the calculation module 224 revises a first preset algorithm according to the type of the power device 270. For example, when the power device 270 is of the impact type, an amount of vibration that are in the Y direction and Z direction and that are of the power device 270 is small, and an amount of vibration in the X direction is large, and when data processing is performed, a detection precision or a weighted value for the X direction needs to be increased. For another example, when the power device 270 is of the sand grinding type, an amount of vibration that are in the X direction and Y direction and that are of the power device 270 is large, and an amount of vibration in the Z direction is small, and when data processing is performed, detection precisions or weighted values for both the X direction and the Y direction need to be increased.

The sensor apparatus 210 may further selectively include a dust detection module. The dust detection module detects dust content in the air. The calculation module 224 accumulates a total dust amount. When determining that the total dust amount exceeds a preset value, the control module 222 sends a corresponding control signal to an alarm apparatus 230, and the alarm apparatus 230 alarms the user according to the control signal.

The sensor apparatus 210 may further selectively include a noise detection module, which detects noise decibel heard by the user. The calculation module 224 accumulates a total noise amount. When determining that the total noise amount or the noise decibel exceeds a preset value, the control module 222 sends a corresponding control signal to an alarm apparatus 230, and the alarm apparatus 230 alarms the user according to the control signal.

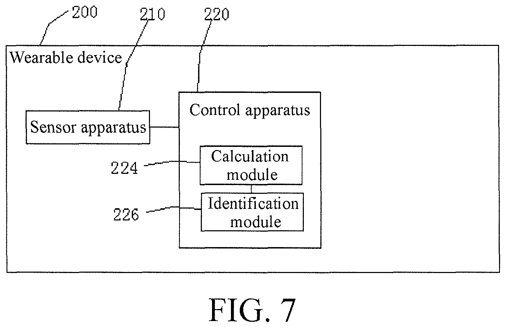

FIG. 7 is a circuit block diagram of a second preferred embodiment of a wearable device 200 according to the embodiment shown in FIG. 5. In this embodiment, a difference between the wearable device 200 and the wearable device 200 in the embodiment shown in FIG. 6 lies in that, in this embodiment, the alarm apparatus 230 may be selectively disposed or not disposed in the wearable device 200. When the alarm apparatus 230 is not disposed in the wearable device 200, the control module 222 may be selectively not disposed in the control apparatus 220.

The wearable device 200 includes the sensor apparatus 210 and the control apparatus 220. The sensor apparatus 210 detects vibration of an upper limb. The control apparatus 220 includes the identification module 226. The identification module 226 receives a signal transmitted by the sensor apparatus 210, and identifies the type of the power device 270 according to the received signal. A method for the identification module 226 to identify the type of the power device 270 is described in the foregoing, and details are not described herein again.

The control apparatus 220 may selectively include a calculation module 224. The calculation module 224 receives a signal transmitted by the sensor apparatus 210, and obtains an accumulated total vibration amount according to a first preset algorithm. Preferably, the calculation module 224 revises a first preset algorithm according to the type of the power device 270. An operating mode of the calculation module 224 is described in the foregoing, and details are not described herein again.

Preferably, the calculation module 224 may further receive a signal of the sensor apparatus 210 and a signal of the identification module 226, and obtains the accumulated vibration component of the power device 270 of the particular type according to a second preset algorithm. The second preset algorithm is basically the same as the first preset algorithm, and a difference lies in that, an amount of vibration is calculated by type in the second preset algorithm. That is, the calculation module 224 accumulates, according to an identification result of the identification module 226, vibration from power devices 270 of a same type, and does not calculate a total amount of all vibration received by the upper limb, thereby learn a vibration status of each type of power device 270.

The calculation module 224 may further receives the signal of the sensor apparatus 210 and the signal of the identification module 226, and record a work status of a particular type of a power device 270, for example, a continuous working time at a time, number of work times, or accumulated working time of a type of power device 270.

The control apparatus 220 may further include a wireless transmission module. A result of the calculation of the calculation module 224 may be transmitted to an intelligent device 250 by using the wireless transmission module, and the intelligent device 250 further sends the result to a cloud. Alternatively, the result may be instruction transmitted by the wireless transmission module to a cloud. The wireless transmission module may be a WiFi module, a Zigbee module, a 4G module, a 3G module, a 2G module, a Bluetooth module, or the like. A user of the intelligent device 250 or the cloud may be the user, or may be a third party, such as a power device manufacturer, an insurance company, or a social and labor security department.

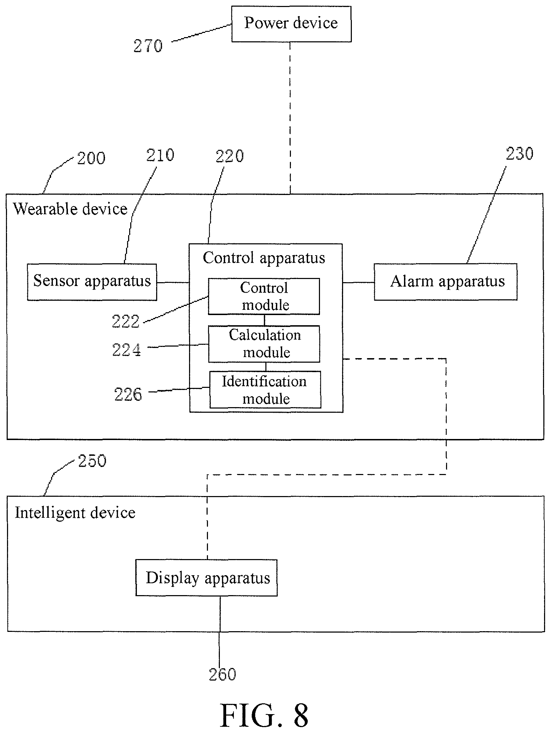

FIG. 8 is a circuit block diagram of a second preferred embodiment of a system that has a wearable device 200. In this embodiment, the system includes: the power device 270, the wearable device 200, and the intelligent device 250. The power device 270 is held by a user, to perform a preset task. The wearable device 200 may be worn on an upper limb of the user. The upper limb may be a position such as an arm, a wrist, or a finger. The wearable device 200 includes a sensor apparatus 210, and the sensor apparatus 210 detects vibration of the upper limb. The system further includes the control apparatus 220. The control apparatus 220 includes the calculation module 224. The calculation module 224 receives a signal transmitted by the sensor apparatus 210, obtains an accumulated total vibration amount according to a first preset algorithm, and transmits a calculation result outwards. The intelligent device 250 includes a display apparatus 260, receives a signal transmitted by the calculation module 224, and displays the signal on the display apparatus 260.

The control apparatus 220 may further selectively include an identification module 226. The identification module 226 identifies a type of the power device 270 according to the signal transmitted by the sensor apparatus 210.

Preferably, the calculation module 224 also receives a signal of the identification module 226, and revises the first preset algorithm according to the type of the power device 270. A revision method is described in the foregoing.

Preferably, the calculation module 224 also receives a signal of the identification module 226, obtains the accumulated vibration component of the power device 270 of the particular type according to a second preset algorithm, and transmits a calculation result outwards. The intelligent device 250 receives the signal, and displays, on the display apparatus 260, accumulated vibration components of different types of power devices 270.

Preferably, the calculation module 224 also receives a signal of the identification module 226, records a work status of the power device 270 of the particular type, and transmits a recorded result outwards. The intelligent device 250 receives the signal, and displays, on the display apparatus 260, work statuses of different types of power devices 270. Preferably, a work status includes at least one of working time at a time, accumulated working time, or number of work times.

The system shown in FIG. 8 may further selectively include an alarm module. In this case, the control apparatus 220 further includes a control module 222. The control module 222 is connected to the calculation module 224. When determining that the total vibration amount exceeds a preset value, the control module 222 sends a control signal to the alarm module, and the alarm module alarms the user. An alarm mode is described in the foregoing.

The control apparatus 220 may further selectively include a wireless transmission module. When the control apparatus 220 is disposed in the intelligent device 250, data is transmitted between the control apparatus 220 and the sensor apparatus 210 by using the wireless transmission module, and additionally the wireless transmission module transmits a calculation result of the calculation module 224 to a cloud. When the control module 222 is disposed in the wearable device 200, the wireless transmission module transmits a calculation result of the calculation module 224 to the intelligent device 250. The wireless transmission module may further selectively also transmit the calculation result of the calculation module 224 to a cloud.

The control apparatus 220 may be disposed in the intelligent device 250 or the wearable device 200. The alarm apparatus 230 may be disposed in the intelligent device 250 or the wearable device 200. In the embodiment shown in FIG. 8, both the control apparatus 220 and the alarm apparatus 230 are disposed in the intelligent device 250. This embodiment is only an example of description, and does not constitute a limit on the present invention. Certainly, the system may either not include the alarm apparatus 230. In this case, the system only displays data of the calculation module 224, and does not send an alarm.

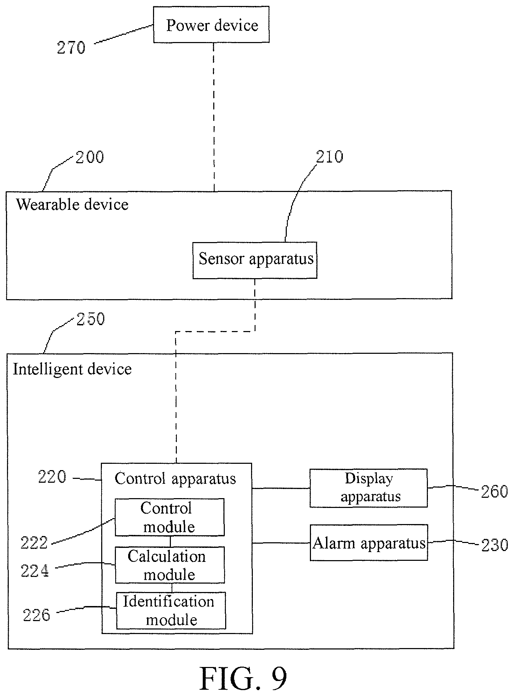

FIG. 9 is a third preferred embodiment of a system that is improved from the system shown in FIG. 8. In this embodiment, the system includes the power device 270, the wearable device 200, and the intelligent device 250. The power device 270 is held by a user, to perform a preset task. The wearable device 200 includes the sensor apparatus 210. The sensor apparatus 210 detects vibration of an upper limb. The intelligent device 250 includes the control apparatus 220, and the control apparatus 220 includes the identification module 226. The identification module 226 receives a signal transmitted by the sensor apparatus 210, and identifies the type of the power device 270 according to the received signal.

The control apparatus 220 may selectively include a calculation module 224. The calculation module 224 receives a signal transmitted by the sensor apparatus 210, and obtains an accumulated total vibration amount according to a first preset algorithm. Preferably, the calculation module 224 revises a first preset algorithm according to the type of the power device 270. An operating mode of the calculation module 224 is described in the foregoing, and details are not described herein again.

Preferably, the calculation module 224 may further receive a signal of the sensor apparatus 210 and a signal of the identification module 226, and obtains the accumulated vibration component of the power device 270 of the particular type according to a second preset algorithm. The second preset algorithm is basically the same as the first preset algorithm, and a difference lies in that, an amount of vibration is calculated by type in the second preset algorithm. That is, the calculation module 224 accumulates, according to an identification result of the identification module 226, vibration from power devices 270 of a same type, and does not calculate a total amount of all vibration received by the upper limb, thereby learn a vibration status of each type of power device 270.

The calculation module 224 may further receives the signal of the sensor apparatus 210 and the signal of the identification module 226, and record a work status of a particular type of a power device 270, for example, a continuous working time at a time, number of work times, or accumulated working time of a type of power device 270.

The system in this embodiment may further selectively include the alarm apparatus 230. In this case, the control apparatus 220 further includes a control module 222. When determining, according to a signal transmitted by the calculation module 224, that the total vibration amount exceeds a preset value, the control module 222 sends a control signal to the alarm apparatus 230, and the alarm apparatus 230 alarms the user.

The control apparatus 220 may further include a wireless transmission module. A result of the foregoing calculation of the calculation module 224 and/or a determining result of the control module 222 may be transmitted to a cloud by using the wireless transmission module.

The intelligent device 250 may further selectively include a display module 260. The display module 260 displays at least a part of a result of the calculation or recording of the calculation module 224. The display module 260 may further selectively display the determining result of the control module 222.

In a fourth preferred embodiment of a system that is improved from the system shown in FIG. 8, the control apparatus 220 in the system includes the calculation module 224 and the identification module 226. The identification module 226 identifies a type of the power device 270 according to a signal of the sensor apparatus 210. The calculation module 224 receives the signal of the sensor apparatus 210 and a signal of the identification module 226, obtains an accumulated vibration component of a particular type of power device 270 according to a second preset algorithm, and transmits a calculation result outwards. The intelligent device 250 includes the display apparatus 260, receives a signal transmitted by the calculation module 224, and displays the signal on the display apparatus 260, thereby notifying a user of the intelligent device 250 of accumulated vibration component statuses of various types of power devices 270.

In this embodiment, the calculation module 224 may further have another function. For the another function, refer to the description about the system shown in FIG. 8. In this embodiment, the system may also include the alarm apparatus 230. For a function and a disposition position that are of the alarm apparatus 230, refer to the description about the system shown in FIG. 8.

In a fifth preferred embodiment of a system that is improved from the system shown in FIG. 8, the control apparatus 220 in the system includes the calculation module 224 and the identification module 226. The identification module 226 identifies a type of the power device 270 according to a signal of the sensor apparatus 210. Preferably, the calculation module 224 receives the signal of the sensor apparatus 210 a signal of the identification module 226, records a work status of the power device 270 of the particular type, and transmits a recorded result outwards. The intelligent device 250 includes a display apparatus 260, receives a signal transmitted by the calculation module 224, and displays the signal on the display apparatus 260, thereby notifying a user of the intelligent device 250 of work statuses of various types of power devices 270. In this embodiment, the calculation module 224 may further have another function. For another function, refer to the description about the system shown in FIG. 8. In this embodiment, the system may also include the alarm apparatus 230. For a function and a disposition position that are of the alarm apparatus 230, refer to the description about the system shown in FIG. 8.

FIG. 6 shows a circuit block diagram of a first preferred embodiment of the wearable device 200 according to the embodiment shown in FIG. 5. The wearable device 200 includes a sensor apparatus 210, a control apparatus 220, and an alarm apparatus 230. The sensor apparatus 210 includes a vibration detection module. The vibration detection module detects vibration of an upper limb. The control apparatus 220 includes a calculation module 224 and a control module 222. The calculation module 224 receives a signal transmitted by the vibration detection module, and calculates a vibration status. The control module 222 is connected to the calculation module 224. The control module 222 determines whether vibration exceeds a preset value. When a determining result is yes, the control module 222 sends a corresponding control signal to the alarm apparatus 230, and the alarm apparatus 230 alarms the user according to the control signal. An alarm mode is described in the foregoing.

The vibration status calculated by the calculation module 224 includes the following cases.

First case: The vibration status includes a total vibration exposure amount of the upper limb. The calculation module 224 obtains an accumulated total vibration amount according to a first preset algorithm. The control module 222 receives a signal of the calculation module 224. When determining that the total vibration amount exceeds a preset value, the control module 222 sends a corresponding control signal to the alarm apparatus 230, and the alarm apparatus 230 alarms the user according to the control signal.

Second case, the vibration status includes vibration duration. The calculation module 224 records the vibration duration according to the signal transmitted by the vibration detection module. The control module 222 receives a signal of the calculation module 224. When determining that the vibration duration exceeds a preset value, the control module 222 sends a corresponding control signal to the alarm apparatus 230, and the alarm apparatus 230 alarms the user according to the control signal.

Third case, the vibration status includes vibration intensity within a unit time. The vibration intensity indicates how intense vibration is. It may be that vibration amplitude and/or a vibration frequency is excessively large. The calculation module 224 calculates the vibration intensity within the unit time according to the signal transmitted by the vibration detection module. The control module 222 receives a signal of the calculation module 224. When determining that the vibration intensity within the unit time exceeds a preset value, the control module 222 sends a corresponding control signal to the alarm apparatus 230, and the alarm apparatus 230 alarms the user according to the control signal.

Fourth case, the vibration status includes an accumulated vibration component of a particular type of power device. The control apparatus 220 further includes the identification module 226. The identification module identifies a type of the power device according to a signal of the sensor apparatus 210. The calculation module 224 receives a signal of the identification module 226, and obtains the accumulated vibration component of the particular type of power device according to a second preset algorithm. The control module 222 receives a signal of the calculation module 224. When determining that the vibration component exceeds a preset value, the control module 222 sends a corresponding control signal to the alarm apparatus 230, and the alarm apparatus 230 alarms the user according to the control signal.

In the embodiment shown in FIG. 8, the system may include only: the power device 270 and wearable device 200. The power device 270 is held by a user, to perform a preset task. The wearable device 200 may be worn on an upper limb of the user, and includes the sensor apparatus 210. The sensor apparatus 210 detects the vibration of the upper limb, and transmits the detected signal to the control apparatus 220. The control apparatus 220 includes the calculation module 224. The calculation module 224 receives the signal transmitted by the sensor apparatus 210, and calculates the vibration status. A calculation result is transmitted to the intelligent device 250. The intelligent device 250 includes the display apparatus 260, receives a signal transmitted by the calculation module, and displays the signal on the display apparatus 260. The vibration status includes the cases that are described in the foregoing, and details are not described herein again.

In addition, the control apparatus 220 may further selectively include an identification module 226. The identification module 226 identifies a type of the power device according to the signal transmitted by the sensor apparatus 210. The calculation module 224 receives a signal of the identification module 226, records a work status of the power device of the particular type, and transmits a recorded result to the intelligent device 250. Preferably, a work status includes at least one of working time at a time, accumulated working time, or number of work times.

Content transmitted by the calculation module 224 may be further transmitted to a cloud by using the Internet. The content may be transmitted by the wearable device 200, or may be transmitted by the intelligent device 250.

In the embodiment shown in FIG. 8, the system may include only: the power device 270 and wearable device 200. The power device 270 is held by a user, to perform a preset task. The wearable device 200 may be worn on an upper limb of the user, and includes the sensor apparatus 210 and the control apparatus 220. The sensor apparatus 210 detects vibration of the upper limb. The control apparatus 220 includes the identification module 226. The identification module 226 receives a signal transmitted by the sensor apparatus 210, and identifies the type of the power device 270 according to the received signal. After the type of the power device 270 is identified, a work status, a vibration status, or the like of this type of power device may be recorded, and related information may be transmitted to the intelligent device 250 for displaying, or for the user to view, or may be transmitted to the cloud by using the Internet, for a third party to use. A specific implementation mode is described in the foregoing, and details are not described herein again.

In the embodiment shown in FIG. 9, the system may include only: the power device 270 and wearable device 200. The power device 270 is held by a user, to perform a preset task. The wearable device 200 may be worn on an upper limb of the user, and includes the sensor apparatus 210. The sensor apparatus 210 detects the vibration of the upper limb, and transmits the detected signal to the intelligent device 250. The intelligent device 250 includes the control apparatus 220, and the control apparatus 220 includes the identification module 226. The identification module 226 receives a signal transmitted by the sensor apparatus 210, and identifies the type of the power device according to the received signal. After the type of the power device 270 is identified, a work status, a vibration status, or the like of this type of power device may be recorded, and related information may be transmitted to the intelligent device 250 for displaying, or for the user to view, or may be transmitted to the cloud by using the Internet, for a third party to use. A specific implementation mode is described in the foregoing, and details are not described herein again.

When some embodiments of the present invention are described, the system includes the intelligent device 250. It should be noted herein that, the intelligent device 250 is personally held by a user. It constitutes a link of work of the system, but it is not necessarily a system that requires to be protected by the present invention. The system that requires to be protected may include the intelligent device 250, or may not include the intelligent device 250. In the present invention, the power device may be an electric tool, a petroleum tool, a manumotive tool, a handheld tool, or the like. In the present invention, the intelligent device may be a device that has a calculation and processing capability, for example, a mobile phone, a tablet computer, or a personal computer. The foregoing embodiments only represent several implementations of the present invention, and the descriptions in the embodiments are relatively specific and detailed, but cannot therefore be understood as limitation on the patent scope of the present invention. It should be pointed out that, a person of ordinary skill in the art may further make several transformations and improvements without disobeying a conception of the present invention. All these transformations and improvements fall within the protection scope of the present invention. Therefore, the protection scope of the present invention shall be subject to the protection scope of the claims.

**Claims**

1. A wearable device, wearable on an upper limb of an operator, wherein the wearable device comprises a sensor apparatus, a control apparatus, and an alarm apparatus, wherein the sensor apparatus comprises a vibration detection module, the vibration detection module detects vibration of the upper limb, the control apparatus comprises a calculation module and a control module, the calculation module receives a signal transmitted by the vibration detection module and calculates a vibration status, the control module is connected to the calculation module, the control module sends a corresponding control signal to the alarm apparatus when determining that the vibration exceeds a preset value, and the alarm apparatus alarms the operator according to the control signal.

2. The wearable device according to claim 1, wherein the vibration status comprises a total vibration exposure amount of the upper limb, the calculation module obtains an accumulated total vibration amount according to a first preset algorithm, the control module sends a corresponding control signal to the alarm apparatus when determining that the total vibration amount exceeds a preset value, and the alarm apparatus alarms the operator according to the control signal.

3. The wearable device according to claim 1, wherein the vibration status comprises vibration duration, the calculation module records the vibration duration according to a signal transmitted by the vibration detection module, the control module sends a corresponding control signal to the alarm apparatus when determining that the vibration duration exceeds a preset value, and the alarm apparatus alarms the operator according to the control signal.

4. The wearable device according to claim 1, wherein the vibration status comprises vibration intensity within a unit time, the calculation module calculates the vibration intensity within the unit time according to a signal transmitted by the vibration detection module, the control module sends a corresponding control signal to the alarm apparatus when determining that the vibration intensity within the unit time exceeds a preset value, and the alarm apparatus alarms the operator according to the control signal.

5. The wearable device according to claim 1, wherein the vibration detection module is an acceleration sensor.

6. The wearable device according to claim 1, wherein the sensor apparatus further comprises at least one of a dust detection module or a noise detection module, the calculation module calculates a total dust amount or a total noise amount, the control module sends a corresponding control signal to the alarm apparatus when determining that the total dust amount or the total noise amount exceeds a preset value, and the alarm apparatus alarms the operator according to the control signal.

7. A system, wherein the system comprises:

   a power device, held by an operator, to perform a preset task; and
   a wearable device, which is the wearable device according to any one of claims 1 to 6.

8. The system according to claim 7, wherein a manner in which an alarm apparatus alarms the operator comprises at least one of a manner of controlling the alarm apparatus to vibrate, controlling the alarm apparatus to produce a sound, or sending a control signal to the power device to make the power device stop a task.

9. The system according to claim 8, wherein the control apparatus comprises an identification module, and the identification module identifies a type of the power device according to signal of a vibration detection module

10. The system according to claim 9, wherein a calculation module receives a signal of the identification module, and revises a first preset algorithm according to the type of the power device.

11. The system according to claim 9, wherein a vibration status comprises an accumulated vibration component of the power device of the particular type, a calculation module receives a signal of the identification module, and obtains the accumulated vibration component of the power device of the particular type according to a second preset algorithm, a control module sends a corresponding control signal to the alarm apparatus when determining that the vibration component exceeds a preset value, and the alarm apparatus alarms the operator according to the control signal.

12. A system, wherein the system comprises:

a power device, held by a user, to perform a preset task; and

a wearable device, wearable on an upper limb of the user, and comprising a sensor apparatus, wherein the sensor apparatus detects vibration of the upper limb, and transmits a detection signal to a control apparatus, the control apparatus comprises a calculation module, the calculation module receives the signal transmitted by the sensor apparatus, calculates a vibration status, and transmits a calculation result to an intelligent device, and the intelligent device comprises a display apparatus, receives a signal transmitted by the calculation module, and displays the signal by using the display apparatus.

13. The system according to claim 12, wherein the control apparatus further comprises an identification module, and the identification module identifies a type of the power device according to the signal transmitted by the sensor apparatus.

14. The system according to claim 13, wherein the calculation module receives a signal of the identification module, records a work status of the power device of the particular type, and transmits a recorded result to the intelligent device.

15. The system according to claim 14, wherein the work status comprises at least working time at a time, accumulated working time, or number of work times.

16. The system according to claim 12, wherein the system further comprises an alarm module, the control apparatus further comprises a control module, the control module is connected to the calculation module, the control module transmits a control signal to the alarm module when determining that the vibration status exceeds a preset value, then the alarm module alarms a user.

17. The system according to claim 12, wherein the system comprises the control apparatus.

18. The system according to claim 12, wherein the control apparatus further comprises a wireless transmission module, and the wireless transmission module transmits the calculation result of the calculation module to the Internet.

19. A system, wherein the system comprises:

a power device, held by an operator, to perform a preset task; and

a wearable device, wearable on an upper limb of the operator, and comprising a sensor apparatus and a control apparatus, wherein the sensor apparatus detects vibration of the upper limb, the control apparatus comprises an identification module, and the identification module receives a signal transmitted by the sensor apparatus, and identifies a type of the power device according to the received signal.

20. The system according to claim 19, wherein the sensor apparatus comprises an acceleration sensor, and the acceleration sensor detects an acceleration generated by the vibration of the upper limb.

21. The system according to claim 19, wherein the identification module obtains a vibration spectrum graph of the power device according to a signal from the sensor apparatus and identifies the type of the power device according to the vibration spectrum graph.

22. The system according to claim 19, wherein the identification module obtains accelerations that are in three directions of X, Y, and Z according to a signal of an acceleration sensor, and identifies the type of the power device according to a numerical relationship between the accelerations that are in the three directions.

23. The system according to claim 19, wherein the control apparatus comprises a calculation module, and the calculation module receives a signal of the sensor apparatus, and calculates a vibration status.

24. The system according to claim 19, wherein the control apparatus comprises a calculation module, and the calculation module receives a signal of from the sensor apparatus and a signal of the identification module, and records a work status of the power device of the particular type.

25. A system, wherein the system comprises:

a power device, held by an operator, to perform a preset task; and

a wearable device, comprising a sensor apparatus, wherein the sensor apparatus detects vibration of an upper limb, and transmits a detected signal to an intelligent device, the intelligent device comprises a control apparatus, the control apparatus comprises an identification module, and the identification module receives the signal transmitted by the sensor apparatus, and identifies a type of the power device according to the received signal.

100    170    130

| Sensor apparatus | Control apparatus | Alarm apparatus |

# FIG. 1

140

| Control button |

100  170      130

| Sensor apparatus | Control apparatus | Alarm apparatus |

| Power supplying apparatus |

150

# FIG. 2

A sensor collects data related to safety
of a user, and the sensor transmits the
collected data to an intelligent device ⎯ S1

The intelligent device receives the
collected data, and processes the
collected data, to obtain intermediate
data ⎯ S2

No

Whether a value
of the intermediate data is greater than a
predetermined value ⎯ S3

Yes

The intelligent device reminds the user ⎯ S4

FIG. 3

─120
─122

─110

Sensor

Reminding unit

Data processing
unit

Feedback unit ─123

─121

FIG. 4

200

270

FIG. 5

200 210 220 230

Wearable device

Sensor apparatus

Control apparatus

Control module

222

Calculation module

224

Identification module

226

Alarm apparatus

FIG. 6

200    210    220

Wearable device

Sensor apparatus

Control apparatus

224 — Calculation module

226 — Identification module

FIG. 7

FIG. 8

270 — Power device

200 — Wearable device

210 — Sensor apparatus

250 — Intelligent device

220 — Control apparatus

222 — Control module

224 — Calculation module

226 — Identification module

Display apparatus — 260

Alarm apparatus — 230

FIG. 9

<table>
<tr><td colspan="2"><strong>INTERNATIONAL SEARCH REPORT</strong></td><td>International application No.<br><strong>PCT/CN2016/073723</strong></td></tr>
</table>

**A. CLASSIFICATION OF SUBJECT MATTER**

G05B 19/00 (2006.01) i; B23B 45/00 (2006.01) i

According to International Patent Classification (IPC) or to both national classification and IPC

**B. FIELDS SEARCHED**

Minimum documentation searched (classification system followed by classification symbols)

G05B; B23B

Documentation searched other than minimum documentation to the extent that such documents are included in the fields searched

Electronic data base consulted during the international search (name of data base and, where practicable, search terms used)

WPI; CNPAT; CNKI; EPODOC: vibration, Wear+, emergency, warn+, alarm+, bracelet, intelligent, sensor, electric hammer, electric pick, electric tool, intensity, amplitude, vibration sensor; WANG, Jiada; threshold, power tool, construction tool, equipment, tool, electric motor, ring, hand, wrist, shak+

**C. DOCUMENTS CONSIDERED TO BE RELEVANT**

| Category* | Citation of document, with indication, where appropriate, of the relevant passages | Relevant to claim No. |
|---|---|---|
| PX | CN 204807959 U (POSITEC POWER TOOLS (SUZHOU) CO., LTD.), 25 November 2015 (25.11.2015), description, paragraphs [0016], [0017], [0021]-[0023], [0033] and [0034], and figures 1-2 | 1-9, 19-20, 22-25 |
| PY | CN 204807959 U (POSITEC POWER TOOLS (SUZHOU) CO., LTD.), 25 November 2015 (25.11.2015), description, paragraphs [0016], [0017], [0021]-[0023], [0033] and [0034], and figures 1-2 | 12-18 |
| Y | CN 104274188 A (QINGDAO KANGHEWEIYE COMMERCIAL CO., LTD.), 14 January 2015 (14.01.2015), description, paragraphs [0029]-[0032] | 12-18 |
| A | CN 103873689 A (SHENZHEN ZTE MOBILE TELECOM CO., LTD.), 18 June 2014 (18.06.2014), the whole document | 1-25 |
| A | CN 1934762 A (O2MICRO USA INC.), 21 March 2007 (21.03.2007), the whole document | 1-25 |
| A | US 2011/0298613 (BEN AYED, M.), 08 December 2011 (08.12.2011), the whole document | 1-25 |

☒ Further documents are listed in the continuation of Box C.    ☒ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 16 March 2016 (16.03.2016) | **25 March 2016 (25.03.2016)** |

| Name and mailing address of the ISA/CN:<br>State Intellectual Property Office of the P. R. China<br>No. 6, Xitucheng Road, Jimenqiao<br>Haidian District, Beijing 100088, China<br>Facsimile No.: (86-10) 62019451 | Authorized officer<br>**WANG, Haifeng**<br>Telephone No.: (86-10), **010-62413550** |

Form PCT/ISA/210 (second sheet) (July 2009)

## INTERNATIONAL SEARCH REPORT

International application No.

**PCT/CN2016/073723**

C (Continuation).     DOCUMENTS CONSIDERED TO BE RELEVANT

| Category* | Citation of document, with indication, where appropriate, of the relevant passages | Relevant to claim No. |
|---|---|---|
| A | CN 104274168 A (SHINAN BRANCH QINGDAO BLUE PRINT CULTURE TRANSMISSION CO., LTD.), 14 January 2015 (14.01.2015), the whole document | 1-25 |

Form PCT/ISA/210 (continuation of second sheet) (July 2009)

## INTERNATIONAL SEARCH REPORT
### Information on patent family members

| International application No. |
| --- |
| **PCT/CN2016/073723** |

| Patent Documents referred in the Report | Publication Date | Patent Family | Publication Date |
| --- | --- | --- | --- |
| CN 204807959 U | 25 November 2015 | None | |
| CN 104274188 A | 14 January 2015 | None | |
| CN 103873689 A | 18 June 2014 | None | |
| CN 1934762 A | 21 March 2007 | CN 1694330 A | 09 November 2005 |
| | | EP 1743410 A2 | 17 January 2007 |
| | | US 2005248320 A1 | 10 November 2005 |
| | | CN 100424961 C | 08 October 2008 |
| | | TW I268839 B | 21 December 2006 |
| | | US 7119516 B2 | 10 October 2006 |
| | | CN 100555796 C | 28 October 2009 |
| | | JP 2007536099 A | 13 December 2007 |
| | | TW I292647 B | 11 January 2008 |
| | | US 7385795 B2 | 10 June 2008 |
| | | HK 1104681 A1 | 21 August 2009 |
| | | CN 100479293 C | 15 April 2009 |
| | | CN 101036260 A | 12 September 2007 |
| | | WO 2005112221 A2 | 24 November 2005 |
| | | US 2005248309 A1 | 10 November 2005 |
| | | JP 4917019 B2 | 18 April 2012 |
| | | EP 1668760 A2 | 14 June 2006 |
| | | JP 2007536098 A | 13 December 2007 |
| | | JP 2005354889 A | 22 December 2005 |
| | | EP 1594209 A1 | 09 November 2005 |
| | | WO 2006011938 A2 | 02 February 2006 |
| | | JP 4819037 B2 | 16 November 2011 |
| | | TW I257035 B | 21 June 2006 |
| | | HK 1102065 A1 | 28 May 2010 |
| | | CN 2821879 Y | 27 September 2006 |
| | | US 2005248318 A1 | 10 November 2005 |
| US 2011/0298613 | 08 December 2011 | US 8107920 B2 | 31 January 2012 |
| | | US 2007042713 A1 | 22 February 2007 |
| | | US 7565132 B2 | 21 July 2009 |
| CN 104274168 A | 14 January 2015 | None | |

Form PCT/ISA/210 (patent family annex) (July 2009)